# EUROPEAN PATENT SPECIFICATION

(11) **EP 3 324 191 B1**
(45) Date of publication and mention of the grant of the patent: **23.10.2019**
(21) Application number: 16382535.9
(22) Date of filing: 16.11.2016
(51) Int. Cl.: G01P 13/02, G01P 21/02

(54) **DEVICE FOR DETERMINING THE ORIENTATION ERROR OF A WIND SENSOR**
VORRICHTUNG ZUR BESTIMMUNG DES RICHTUNGSFEHLERS EINES WINDSENSORS
DISPOSITF POUR DETERMINER L'ERREUR D'ALIGNEMENT D'UN DETECTEUR DU VENT

(43) Date of publication of application: 23.05.2018
(73) Proprietor: Kintech Ingenieria, S.L., 50004 Zaragoza (ES)
(72) Inventor: SANZ CASTILLER, José María, E-50004 Zaragoza (ES); TALLADA SOUTO, Rafael, E-50004 Zaragoza (ES); VÁZQUEZ PULIDO, Íñigo, E-50004 Zaragoza (ES); GARCÍA VALLÉS, Fernando, 50009 Zaragoza (ES)
(74) Representative: ABG Intellectual Property Law, S.L.

(56) References cited:
- EP-A1- 2 818 875
- WO-A1-2014/102841
- WO-A2-2009/025911
- US-A1- 2009 044 418

## Description

### OBJECT OF THE INVENTION

The present invention is an optoelectronic device for determining the orientation error of a wind sensor, capable of measuring its own orientation and the orientation of the system to which it is attached as a result of the position of the Sun. The invention has a configuration which allows it to be coupled to instruments for measuring wind direction such as wind vanes, ultrasonic anemometers and remote sensing devices such as SODAR and LIDAR.

The device does not physically orient the sensor to which it is attached but rather provides a correction value based on the Sun azimuth which allows eliminating the offset of wind direction measurements as a result of poor sensor orientation that was either introduced during installation or came about throughout the measurement campaign, for example, due to the deformation of the bearing structure.

The invention is particularly useful in wind sensors installed in hard-to-access structures such as wind measurement towers, where a correct, orientation error-free installation is not possible.

### BACKGROUND OF THE INVENTION

The importance of obtaining quality measurements of the energy resource to be exploited, in this case wind energy, has gained a lot of awareness nowadays. The use of suitable instruments and methodology improves the results obtained in wind audits and makes it easier to then obtain funding for a wind project.

Tasks of this type carried out before developing and constructing a wind farm usually comprise about two years of measurement taking. The data obtained is processed and then analyzed in an attempt to predict as accurately as possible the energy yield and the economic profitability of the future wind farm. A quality study minimizes investment risks. It is well known that when assessing the wind resource of a location, one of the most important points is the uncertainty analysis. It is of vital importance to have a lot of measurements at hand and to use reliable and precise equipment in order to reduce the uncertainties associated with the measurement campaign to a minimum.

The primary data of interest of a location during the wind resource assessment phase are wind speed and wind direction, which are measured at several heights in order to best characterize the speed profile in the area swept by the blades of the future wind-driven power generator. To collect said data and assess the wind resource, prospection towers in which wind measurement is performed by means of anemometers for speed and wind vanes for direction are usually installed.

Wind vanes have a simple operating principle: it consists of a fixed stator and a rotor rotating freely as the wind blows. In other words, the rotor tends to follow the instantaneous direction of the wind. For the sensor to be effective, the fixed part of the wind vane must be oriented in a known direction, for example towards the North Magnetic Pole or in the direction of the boom supporting it, for the purpose of establishing wind direction.

Although the north will be used as a reference throughout the entire description, it is possible to use any other orientation (for example east, south, west...), although it is understood that either orientation measured in angle degrees is separated by an established, fixed amount, and therefore the measurements according to either reference can be directly related by adding up the angle difference between the North Pole and the new reference. For this reason, any reference other than the North Pole is considered equivalent.

A general problem has been detected in the wind data acquisition process in the wind sector: wind vane orientation errors. The industry assigns a standard uncertainty of 5º to the measurement of any wind vane, due almost entirely to the impossibility of orienting them correctly in a known direction.

An error in orienting the wind vane reference entails an incorrect wind direction measurement, which can lead to the wind turbines being incorrectly positioned in the micro-siting phase. This situation becomes particularly problematic in locations with complex wind roses, i.e., locations in which there are two or more predominant directions. One of the most relevant factors in positioning wind turbines is the slipstream generated behind them since, by placing a second wind-driven power generator behind the slipstream, the production, stability conditions and even service life of this second wind-driven power generator would be seriously affected. The placement or non-placement of a second wind-driven power generator in a slipstream can depend on small angle variations since more often than not the space available for micro-siting is limited. Wind direction measurement errors must be very small, thereby optimizing not only the wind resource, but also the space available. All this significantly affects wind farm production and exploitation.

The wind vanes are installed in an operative mode at the end of a boom about 2.5 meters from the measurement tower (usually guyed structures) which is in turn located at a height between 40 and 140 meters above the ground. This has the drawback of making it difficult to access and handle the vane in the final working position. There are many current methodologies for vane orientation, although all of them involve errors that cannot be corrected with the current state of the art. The most widely used method consists of establishing the orientation of the boom at ground level and in turn referencing the sensor orientation to the boom direction. The boom-sensor assembly is then lifted to its final location, trying not to change the orientation pre-established on the ground during this operation.

When using magnetic compasses, there are furthermore additional errors associated with the Earth's magnetic field being altered by any ferromagnetic material, either an artificial one such as the tower structure, or a natural one such as the presence of certain minerals underground. Likewise, the magnetic field and its declination vary over time and have anomalies at different points of the planet. In practice, this translates into the need for the installation technician to ensure that there are no disruptions in the Earth's magnetic field and to correctly apply the correction associated with magnetic declination in the location of installation.

On the other hand, metal structures used in wind resource assessment usually become somewhat bent over time or even during installation and the orientation of the booms in which the vanes are installed can be altered due to the very harsh weather conditions to which they are subjected. Extreme winds or the fall of ice blocks breaking off from the top part of the tower are only two examples.

Therefore, the orientation established during installation, even if it is error-free, can experience variations throughout the measurement campaign when the installed wind vane or wind sensor are in operation.

Since the wind vanes will not be reoriented once installed, this error is hard to detect and even harder, if not impossible, to correct.

In addition to the wind vanes, recent technological advancements in the field of wind resource assessment have introduced new devices capable of measuring wind direction, such as ultrasonic anemometers and RSDs (Remote Sensing Devices): LIDAR (Light Detection and Ranging) and SODAR (Sonic Detection and Ranging), but all these devices have similar problems in terms of orientation.

The present invention overcomes orientation problems of both the wind vanes and the mentioned current devices, as it allows establishing the correct wind direction measurement obtained with these wind sensors, with the only requirement of receiving the Sun's radiation at least at a certain time.

Document WO2009/025911A2 discloses a system and method for correcting wind speed and direction data collected by a sodar or lidar apparatus.

Document EP2818875A1 discloses a device and method for measuring wind direction.

Document WO2014/102841A1 discloses an electronic solar compass.

Document US2009/0044418A1 discloses an automatic solar compass comprising a cylindrical onmi-directional lens, a detection means, and a servomechanism.

### DESCRIPTION OF THE INVENTION

One aspect of the invention consists of a device for determining the orientation error of a wind sensor with respect to the Geographic North Pole. This wind sensor is an apparatus taking wind-related values where said values require correct sensor orientation. This is the case of wind vanes which take as a value the angle from where the wind blows, or other more complex wind sensors which even provide velocity field vector values.

The wind sensor has a fixing base which must be suitably oriented with respect to the Geographic North Pole so that the measurements obtained by the sensor are correct and error-free.

This base is installed, in an operative mode, in places where correct orientation cannot be assured giving rise to measurement errors.

The device according to this first inventive aspect relates to a device comprising:
- a first base adapted for fixing the device to a support structure; and
- adjustment means for adjusting the relative azimuth orientation between the device and the wind sensor.

The device is fixed to the support structure by means of the first base. This fixing does not have to assure the correct orientation of the device precisely since it is not capable of assuring the correct orientation of the wind sensor either. Nevertheless, it must assure the correct orientation between both apparatus, i.e., the device object of this invention and the wind sensor.

It is understood that the adjustment means for adjusting the azimuth orientation are means which allow a change in the relative angular position on the horizontal plane, when the device is in the operative position, between the device and the wind sensor. In addition to changes in the relative angular position, the adjustment means can have fixing means keeping the relative orientation fixed once adjusted.

To state that the device is oriented in an operative manner, the direction of gravity is taken as a verticality reference and a plane transverse thereto is taken as the horizontal reference. In most embodiments, the components of the device are longitudinally distributed. The device is intended for being arranged vertically in this longitudinal direction, except for possible inclination errors during installation which separate the device from verticality. Throughout the description, "orientation" of a specific device or part of the device will be interpreted as the angular position on the horizontal plane and where a change in orientation entails a rotation with respect to a vertical axis, it being understood that inclination errors are allowed.

According to one embodiment of the invention, the correct relative position between the device and the wind sensor is assured by the fixing of each of the apparatus and the relative orientation between both is assured by a laser beam emitter located in the device and adapted for reaching a pre-established reference point of the wind sensor when the orientation is correct. Other ways to assure the position between both apparatus is a system for attaching them together with a mechanical reference which is made to coincide when the relative orientation is correct. In the first case, the device, the wind sensor or both have a fixing which allows the change in orientation such that they are both finally fixed when the laser beam is made to coincide with the mentioned pre-established reference.

The device further comprises:
- *photosensing means adapted for reading Sun azimuth;*
- *an output configured for providing at least the read Sun azimuth value read by the photosensing means.*

The use of photosensing means adapted for reading the Sun azimuth allows obtaining a reference with respect to which a subsequent comparison with the measurement that the photosensing means should actually measure if the orientation of the device were suitable can be established. When reading the Sun azimuth, the correct position of the Sun is considered an obtainable piece of data such that the difference with the value provided by the output is a correction value which allows correcting the output of the wind sensor, giving rise to an error-free value.

The device has a second base which allows coupling both elements, i.e., the device and the wind sensor, to one another. In this case, this second base must allow adjusting the relative azimuth orientation (always understood as the device being oriented in an operative manner) between the device and the wind sensor.

According to another embodiment, the device comprises a central processing unit adapted for receiving and processing the values read by the photosensing means, as well as for carrying out additional tasks or steps. The indication that the central processing unit is adapted for carrying out specific steps must be interpreted as said unit being a specific unit the behavior of which can be, for example, established by a program previously loaded in its memory. Other ways to establish the central processing unit as a specific unit is by means of ASIC techniques in which the steps and operations required for carrying out input processing and calculations are already configured in the internal electronics at the time of manufacture.

The tasks carried out by this central processing unit include, among others, determining by means of the equations of solar coordinates on the celestial sphere (hereinafter "equations of the Sun") the correct or theoretical Sun azimuth value, i.e., the angle measured on the celestial horizon which forms the vertical projection of the Sun with the cardinal point of reference, and depends on the day, time and GPS position of the orientation error determination device when read by the photosensing means. The equations of the Sun are known equations establishing the position of the Sun based on the location and time, expressible for example by means of day and time. The azimuth value, which will be referred to herein as theoretical azimuth value Ψ, can be calculated based on the position of the Sun.

According to this same embodiment, the central processing unit is adapted for determining the offset value between the measured azimuth value, which will be referred to herein as *Aₘ*, and the theoretical azimuth value Ψ determined based on the equations of the Sun, and for providing this value in an output.

The offset value is the correction value that must be applied to the reading of the wind sensor so that the measurements thereof are correct.

According to one embodiment, this correction is carried out as post-processing. According to another embodiment, the central processing unit also receives the value from the wind sensor and establishes, based on the offset value, the correction of the value from the wind sensor and provides the corrected value without requiring post-processing.

According to another embodiment, location-related data, time-related data or both are obtained in the device itself by means of a GPS device and a clock. According to another embodiment, the clock is integrated in the central processing unit itself.

According to another embodiment, the central processing unit is integrated into the device.

### DESCRIPTION OF THE DRAWINGS

The foregoing and other features and advantages of the invention will be more clearly understood based on the following detailed description of a preferred embodiment, provided only by way of illustrative and non-limiting example in reference to the attached drawings.
Figure 1 schematically shows a wind measurement tower and an embodiment of the invention coupled to a wind vane and fixed to the tower by means of a boom.
Figure 2 schematically shows an embodiment of the invention with a wind vane installed on it.
Figure 3 shows an enlarged view of the preceding embodiment to depict in greater detail the device and some elements that are schematically shown.

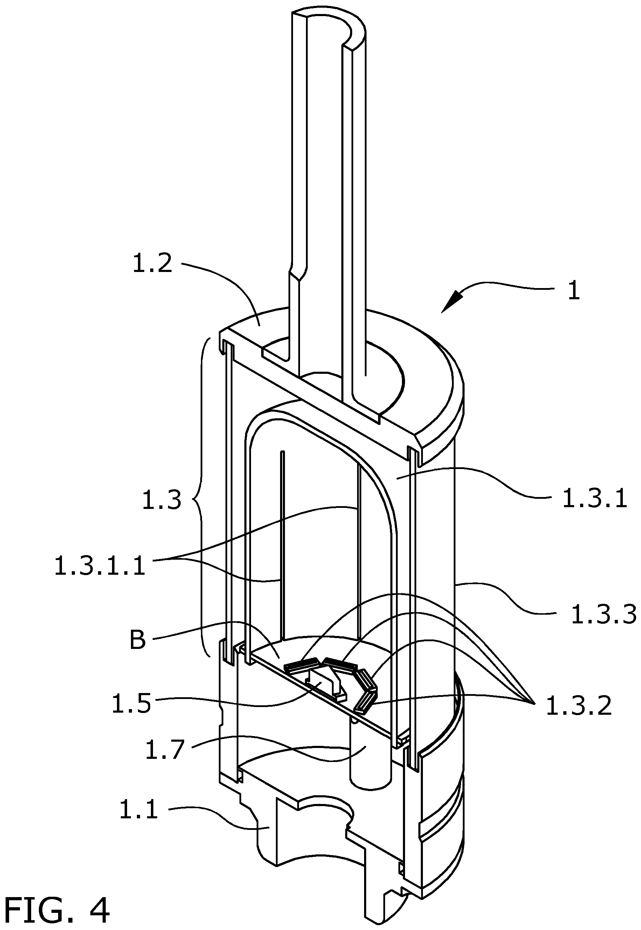

Figure 4 shows a section of the same example of device to depict the inside thereof, showing some of its components.
Figure 5 shows another embodiment in which the wind sensor to which the invention is coupled is a SODAR device.

### DETAILED DESCRIPTION OF THE INVENTION

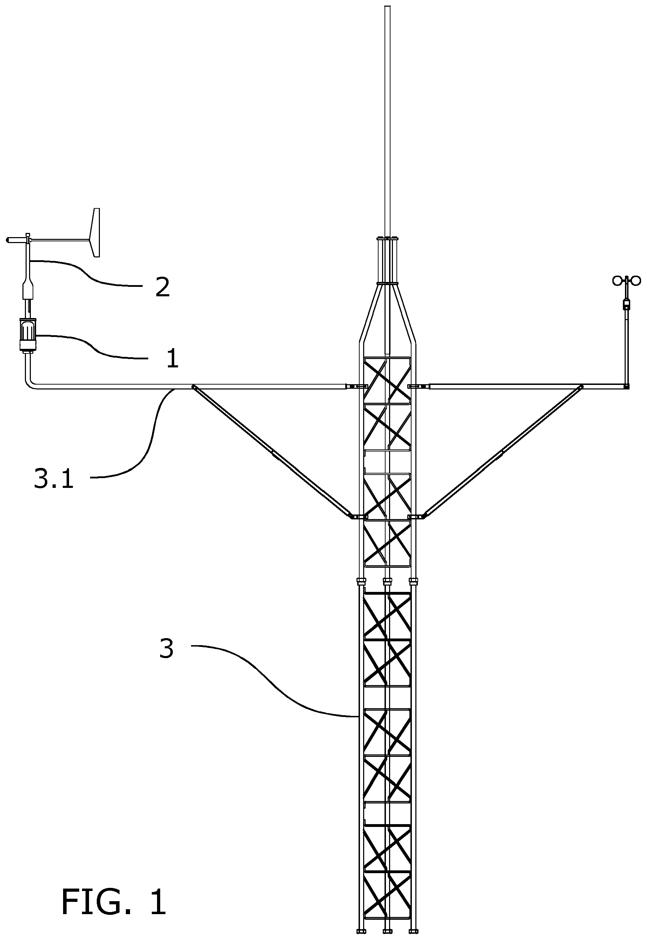

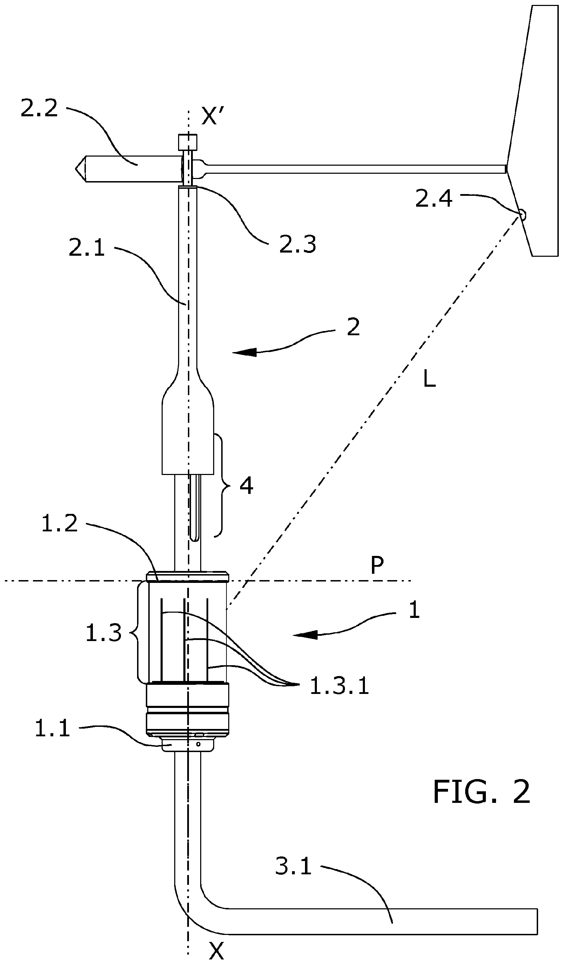

According to the first inventive aspect, the present invention relates to a device for determining the orientation error of a wind sensor. In a first embodiment shown in Figures 1 and 2, the wind sensor is a wind vane (2) which is located directly on the device (1).

Figure 1 shows a wind measurement tower (3). A boom (3.1) extending horizontally for fixing a wind vane (2) is located at a specific height. The boom keeps the wind vane (2) away from the tower (3) so that wind direction measurements are not affected by the influence the tower (3) has on the wind velocity field.

The height at which the wind vane (2) is located and the distance thereof to the tower (3) prevent an operator from having direct access to the wind vane (2), and therefore *in situ* adjustment for orienting same is not possible. The common way to fix the wind vane (2) to the tower (3), though already described in detail in the section dedicated to the description of the state of the art, consists of first fixing the wind vane (2) to the boom (3.1) and then lifting the boom (3.1) and fixing it to the tower (3) without making subsequent adjustments.

The vane (2) is formed by a fixed support (2.1) and by a moving element (2.2). The moving element (2.2) orients itself according to the air flow direction such that the angle between the fixed support (2.1) and the moving element (2.2) is measured by means of a transducer (2.3) generating an output signal proportional to said relative angle. This angle is used for determining the orientation from where the wind blows.

The vane (2) therefore measures the orientation of the wind with respect to the fixed support (2.1), so if this fixed support (2.1) is not suitably oriented with respect to the Geographic North Pole the wind measurements will have a constant error equal to the angle of orientation error of the fixed support (2.1).

Figure 2 schematically shows an embodiment of the invention in which a section of the boom (3.1) fixed to the wind tower (3) is shown in the lower part and the device (1) for determining the orientation error of the wind vane (2) is located on this boom (3.1), which wind vane (2) is in turn located right above the device (1). According to other embodiments, the wind vane (2) can be located below the device (1), where both (1, 2) together with the boom (3.1) would have the opposite vertical distribution; i.e., the boom (3.1) at the very top with the orientation error determination device (1) below it and the entire wind vane (2) attached to the device (1) at the very bottom. Nevertheless, in this other case the device (1) would maintain original vertical distribution on the inside thereof since it must always read the position of the Sun which is always overhead during the day.

According to this embodiment, the device (1) is fixed to the boom (3.1) through a first base (1.1). Like in the state of the art, the orientation of this base does not have to be the suitable orientation due to deviations typical of the installation or for other external reasons that arise, such as for example, the bending of the structure, or deviations affecting the orientation of the boom (3.1) caused by bad weather or by ice breaking off.

There is a second base (1.2) on the device in which the fixed support (2.1) of the wind vane (2) is fixed, the device (1) therefore being placed between the boom (3.1) and the wind vane (2).

In this embodiment, adjustment means (4) for adjusting the relative azimuth orientation between the device (1) and the wind sensor (2) are located on the second base (1.2). These orientation means allow error-free adjustment of the relative orientation of the fixed support (2.1) of the wind vane (2) with respect to the device (1), particularly with respect to the first base (1.1). These adjustment means (4) are formed by a shaft-sleeve assembly allowing vertical relative rotation between the second base (1.2) of the device (1) and the fixed support (2.1) of the wind sensor, in this case the wind vane (2), such that it allows establishing the correct angular relative position. Once this angular position is established, a setscrew or retaining means that retain the shaft and the sleeve to one another keep this angular position fixed.

This adjustment allows the corrections provided by the device (1) to be the correct ones and to coincide with the difference between the value measured by the transducer (2.3) of the wind vane (2) and the actual value of the direction from which wind blows with respect to the Geographic North Pole.

Although the relative orientation between the device (1) and the wind vane (2) has been previously adjusted through the adjustment means (4) for adjusting the relative azimuth orientation, once the device (1) - wind vane (2) assembly is located in the boom (3.1) and once they are both located on the tower (3), the measurements provided by the transducer (2.3) of the wind vane (2) have orientation error due to the unsuitable orientation of the device (1) on which the wind vane (2) is located.

The device (1) has photosensing means (1.3) adapted for reading the Sun azimuth and has an output with said read value (*Aₘ*).

According to this embodiment, the photosensing means (1.3) comprise a casing (1.3.1) having a cylindrical configuration with the slotted cylindrical wall (1.3.1.1) the slits (1.3.1.1) of which are equally distributed around the perimeter. In this embodiment, the casing (1.3.1) is closed at the top thereof with a dome-shaped cover. The terms slot and slit will be used interchangeably throughout the description, slot being understood as a through opening which allows the passage of light.

There are housed inside the casing (1.3.1) photosensing elements (1.3.2) adapted for receiving the light passing through one or more slits (1.3.1.1), which allows establishing the orientation of the Sun *Aₘ* with respect to the device (1) by means of processing the position of the illuminated region of the photosensors (1.3.2).

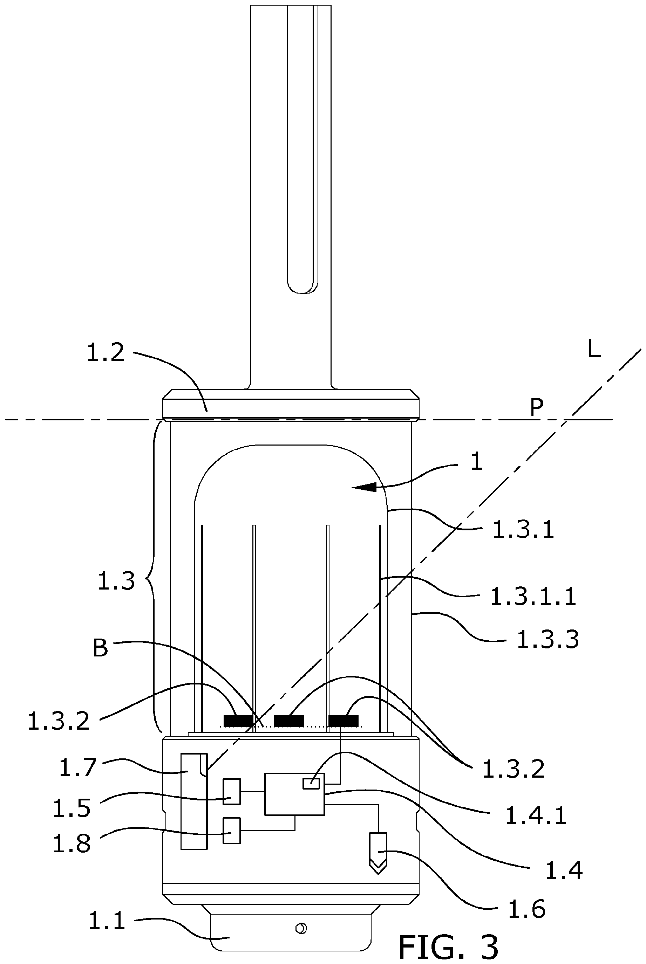

The cylindrical configuration of the walls of the casing (1.3.1) extends according to a longitudinal direction which, in an operative position and in the absence of inclination, coincides with the vertical direction. When the sunlight strikes the walls of the casing (1.3.1), it passes through the slits (1.3.1.1) that are exposed to the light, illuminating the base (B) inside the casing (1.3.1) according to one or more lines of specific thickness. This base (B) extends parallel to the horizontal plane (P), which in Figures 2 and 3 is shown with a discontinuous line, transverse to the vertical direction X-X'.

In this embodiment, the photosensing elements (1.3.2) located on the base (B) inside the casing (1.3.1) are circumferentially distributed around the center established by the longitudinal axis of the casing (1.3.1).

The photosensing elements (1.3.2) used in this embodiment are formed by alignments of 128 light-sensitive pixels. The light passing through a slit (1.3.1.1) illuminates one or more pixels close to one another in one or more photosensing regions. The response function obtained from the reading of the illuminated photosensing element (1.3.2) allows establishing a point at which illumination is maximum; or, when two or more pixels reach saturation, the central point at which said saturation is reached is established. The coordinates on the horizontal plane of the position of the points of maximum illumination, joined by a straight line and aligned with the coordinates on the same horizontal plane of the vertical projection of the slit (1.3.1.1) causing the light beam, allow determining the azimuth angle on the horizontal plane of the read position of the Sun (*Aₘ*).

When the Sun is at a very high position and fails to illuminate any of the photosensing elements (1.3.2), the reading is postponed until the Sun strikes the photosensing elements (1.3.2). This temporary lack of reading is not relevant in applications of this type given that the azimuth correction does not have to change from one day to the next. The correction update is simply postponed in time until a reading of the Sun is obtained.

One and the same pixel of the photosensing element (1.3.2) can be illuminated with light coming in from several slits (1.3.1.1), although not simultaneously. The time of the reading and the progression from earlier readings allows discriminating between double solutions and determining the position of the Sun without any doubt. A person skilled in the art is capable of establishing the different cases to be considered. Simulating or experimenting with light beam progression on the photosensing elements (1.3.2) throughout a complete light period is sufficient for determining the cases to be discriminated.

According to one embodiment, the photosensing elements (1.3.2) have a circular distribution centered at the center of the base (B) inside the casing (1.3.1). In this embodiment, the photosensing elements (1.3.2) comprise a plurality of photosensing elements (1.3.2), each of them comprising a straight line of sensing pixels, being distributed circumferentially configuring straight sections according to one or more regular polygons.

According to another embodiment, the photosensing elements (1.3.2) comprise a second alignment of photosensing elements (1.3.2) that are linear in sections, concentric with the polygonal distribution of the first ones, where each center of the linear section of the second alignment coincides with the vertex of the distribution polygon of the first photosensing elements (1.3.2).

The alignment vertices of the photosensing elements (1.3.2) forming a polygon do not have light-sensitive pixels. This configuration allows obtaining, even in these vertices, a reading of the position of the Sun through the photosensing elements (1.3.2) of the second alignment. When the light beam strikes both the first photosensing elements (1.3.2) and the seconds photosensing elements (1.3.2), since none of the vertices coincide, a redundant reading is then obtained. For example, using part of the readings is sufficient for determining the Sun azimuth angle *Aₘ*.

According to another embodiment, the photosensing elements (1.3.2) comprise a matrix of photosensing pixels centered at the center of the base (B) inside the casing (1.3.1). In this example, the straight line approximated by the alignment of pixels that are illuminated or have more illumination determines the direction with which the position of the Sun *Aₘ* is obtained.

According to this embodiment, the device (1) comprises a central processing unit (1.4), schematically shown in Figure 3, which is in communication with the photosensing elements (1.3.2) shown as a discontinuous horizontal line, which in turn represents the concentric distribution of the photosensing elements (1.3.2) on the plane of the base (B) inside the casing (1.3.1).

The central processing unit (1.4) is adapted for establishing, based on the illumination level of the photosensing elements (1.3.2), the angle formed by the projection of the Sun on the plane on which the photosensing elements (1.3.2) are located with the reference of the device (1), this value being referred to as read Sun azimuth value (*Aₘ*).

In addition to this processing of the data from the photosensors (1.3.2), interpreted as the central processing unit (1.4) receiving the read Sun azimuth value (*Aₘ*), the central processing unit (1.4) is adapted for:
a) determining, by means of the equations of solar coordinates on the celestial sphere, the theoretical azimuth value (Ψ) depending on the date, time and GPS position of the orientation error determination device (1) when read by the photosensing means (1.3); and
b) determining and providing in an output the geographical orientation as the offset value between the read Sun azimuth value (*Aₘ*) and the theoretical Sun azimuth value (Ψ) determined based on the equations of solar coordinates on the celestial sphere.

The equations of the Sun can be implemented in the central processing unit (1.4) by means of, for example, a software program.

In this embodiment, the central processing unit (1.4) is installed in the device (1) and the data required for calculating the theoretical Sun azimuth value (Ψ), the time instant at which the measurement is carried out and the GPS position, are also obtained with components installed in the device (1) itself. The time instant is determined by means of the clock (1.4.1) of the central processing unit (1.4) and a GPS device (1.5) provides the GPS position and periodic update of the exact time to said central processing unit (1.4).

In addition to the orientation error, the device can be installed with a specific inclination with respect to the vertical (direction X-X'). The device (1) comprises an inclinometer (1.8) providing the inclination value to the central processing unit (1.4), which establishes with this value the corrections with which to obtain the read azimuth with correction (*Aₘ'*) as it would be measured if the plane of the photosensors (1.3.2) were parallel to the horizontal plane (P).

The drawings shows a compact configuration of the device (1) in which the first base (1.1) located in the lower part in an operative position is parallel to the horizontal plane (P), the second base (1.2) on which the wind vane (2) is fixed is also horizontal and they are both spaced from one another leaving a space for the photosensing means (1.3).

The photosensing means (1.3) are formed by the casing (1.3.1) and by the photosensing elements (1.3.2), located parallel to a plane (P) transverse to the longitudinal direction, housed in said casing (1.3.1). Both (1.3.1, 1.3.2) are in turn housed in a transparent protective cylinder (1.3.3) assuring the leak-tightness of the device, protecting the electronic components. Said protective cylinder (1.3.3) introduces a refraction deviating the beam which the central processing unit (1.4) is in charge of correcting based on constructive parameters of the transparent protective tube (1.3.3) and of the casing (1.3.1), to deliver a distortion-free read azimuth value. In this embodiment, this distortion-free read azimuth value is received by the central processing unit (1.4) for determining and providing in the output the offset value with respect to the theoretical azimuth (Ψ). This correction is applicable in all those examples in which there is glass or other transparent protective material causing refraction of the light beams from the Sun.

The central processing unit (1.4) is in communication, by means of a data connection (1.6), with external management devices located in the bottom part of the tower (3) receiving wind direction measurements. In this embodiment, the management devices (not shown in the drawings) receive the signals from the transducer (2.3) of the vane (2) and from the central processing unit (1.4) of the device (1) through the data connection (1.6), which allows obtaining the corrected wind direction value (value without offset).

In this embodiment, the data connection is by means of wire; nevertheless, according to other embodiments, it is wireless or a combination thereof, for example a wireless connection between the device (1) and the base of the tower (3), and then a wired connection for collecting data on the ground from a plurality of towers (3).

Adjustment means (4) for adjusting the angular position between the device (1) and the wind vane (2) based on a shaft-sleeve assembly have been described. In this embodiment, the device (1) comprises a laser emitter (1.7) located therein, below the sensing elements (1.3.2), generating a beam oriented towards one of the slits (1.3.1.1). When the laser beam is activated, it exits through the slit (1.3.1.1) and strikes a reference point (2.4) of the wind vane (2), assuring the correct relative position between device (1) and wind vane (2).

Other embodiments of the invention are formed by a system incorporating an ultrasonic anemometer as a wind sensor. In this case, there is no moving element like in the vane (2.2) but a reference is indeed required for establishing the correct angular position between the device (1) and the ultrasonic sensor (2). In this case, for adjusting the relative orientation between the orienting device (1) and the ultrasonic anemometer (2) the laser emitter (1.7) is adapted for striking a reference boom of the ultrasonic anemometer (2).

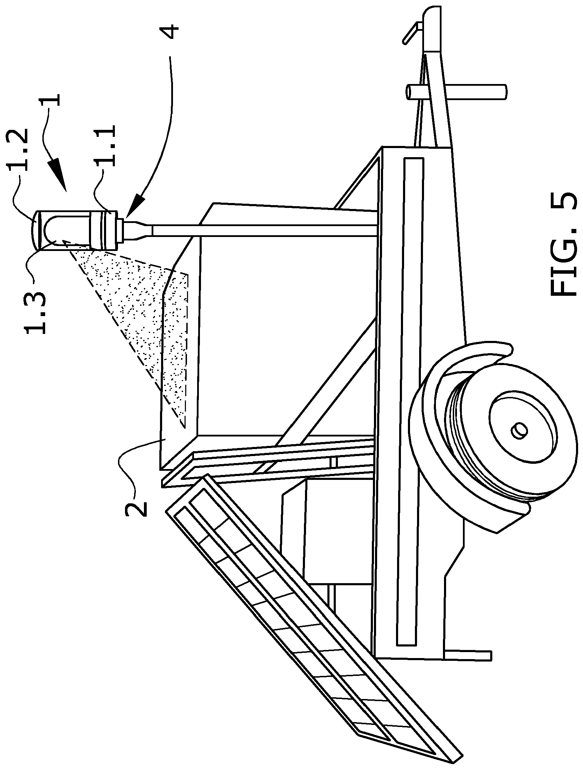

Figure 5 shows a system formed by a device (1) for determining the orientation error of SODAR/LIDAR (2). The SODAR/LIDAR (2) apparatus have large dimensions and are usually located on a trailer which makes the transport thereof to the area of measurement easier. Once located in the place of measurement, said apparatus must also have a suitable orientation.

The device (1) according to the invention allows establishing SODAR/LIDAR (2) correction measurements for which purpose they must both have their orientation adjusted.

In this case, due to its large dimensions the SODAR/LIDAR apparatus (2) is not located on a second base (1.2) of the device (1) for determining orientation error, said base (1.2) being unnecessary in this application, rather they are both linked by one and the same support. In this embodiment, the device (1) for determining orientation error is located on a rod integral with the SODAR/LIDAR (2) apparatus and is susceptible to adjustment by modifying the angular position with respect to the SODAR/LIDAR (2).

The rod places the device (1) in a raised position with respect to the SODAR/LIDAR (2). The laser emitter (1.7) located inside the device (1) emits a downwardly-oriented beam with a specific inclination. One configuration example places the laser emitter (1.7) inside the device with the laser beam pointing vertically upwards until reaching a mirror that redirects it downwards with the pre-established inclination, as shown in Figure 5. A reference element in the SODAR/LIDAR (2), for example one of the edges thereof, assures the correct relative orientation between the device (1) and the SODAR/LIDAR (2).

The measurements of the read Sun azimuth value (*Aₘ*) taken by the device (1) allow the central processing unit (1.4) to establish the correction value based on the equations of the Sun as described, applying such corrections to the values obtained by the SODAR/LIDAR (2).

## Claims

1. A device (1) for determining the orientation error of a wind sensor (2) with respect to the Geographic North Pole, comprising:
- a first base (1.1) adapted for fixing the device (1) to a support structure;
- adjustment means (4) for adjusting the relative azimuth orientation between the device (1) and the wind sensor (2);
- photosensing means (1.3) adapted for reading the Sun azimuth,
- an output configured for providing at least the read Sun azimuth value (*Aₘ*) read by the photosensing means (1.3), and
- a second base (1.2) adapted for fixing the wind sensor (2) to the device (1),
wherein:
- the first base (1.1) and the second base (1.2) are spaced from one another according to a longitudinal direction;
- the photosensing means (1.3) comprise a casing (1.3.1) and photosensing elements (1.3.2), wherein these photosensing elements (1.3.2) are located on a plane transverse to the longitudinal direction, coinciding with the vertical direction in an operative mode;
- the photosensing means (1.3) are located between both bases (1.1, 1.2), such that, in an operative mode, the first base (1.1), the second base (1.2) and the photosensing means (1.3) are distributed according to the longitudinal direction;
- the photosensing elements (1.3.2), according to the projection in accordance with the longitudinal direction on the plane containing same, are perimetrically surrounded by the casing (1.3.1); wherein the casing (1.3.1) has an essentially cylindrical or prismatic configuration and comprises in its side walls a plurality of vertical slits (1.3.1.1) equally distributed around the perimeter for the passage of rays of the Sun; wherein the slits (1.3.1.1) are oriented in the longitudinal direction which in an operative mode allow the passage of rays of the Sun to the photosensing elements (1.3.2) housed in said casing (1.3.1) for determining the read Sun azimuth value (*Aₘ*) depending on the illumination of the photosensing elements (1.3.2) by the rays of the Sun going through the slits (1.3.1.1) and the position of said slits (1.3.1.1).

2. The device (1) according to claim 1, wherein it additionally comprises a central processing unit (1.4) adapted for:
a) receiving the read Sun azimuth value (*Aₘ*),
b) determining, by means of the equations of solar coordinates on the celestial sphere, the theoretical azimuth value (Ψ) depending on the date, time and GPS position of the orientation error determination device (1) when read by the photosensing means (1.3), and
c) determining and providing in an output the geographical orientation as the offset value between the read Sun azimuth value (*Aₘ*) and the theoretical Sun azimuth value (Ψ) determined based on the equations of solar coordinates on the celestial sphere.

3. The device (1) according to claim 2, wherein the orientation error determination device (1) comprises:
- a GPS device (1.5) providing: the value of the GPS position, the date and time, or both, to the central processing unit (1.4);
- a clock for providing the date and time values to the central processing unit (1.4);
- an inclination sensor (1.8), and wherein the central processing unit (1.4) is adapted for establishing a correction of the read Sun azimuth value (*Aₘ*) depending on the inclination provided by the inclination sensor (1.8); or
- any combination of the aforementioned.

4. The device (1) according to claim 2 or 3, wherein the central processing unit is configured for determining the read Sun azimuth value (*Aₘ*) depending on the photosensing elements illuminated by the light beam or beams passing through the slits.

5. The device (1) according to any of the previous claims, wherein the photosensing elements (1.3.2) comprise photosensing pixels, and wherein these photosensing elements (1.3.2) are distributed circumferentially on the plane transverse to the longitudinal direction and positioned concentrically with the slotted casing (1.3.1).

6. The device (1) according to claim 5, comprising a plurality of photosensing elements (1.3.2), each of them comprising a straight line of sensing pixels, being distributed circumferentially in accordance with straight sections according to one or more regular polygons.

7. The device (1) according to any of the previous claims, additionally comprising a laser emitter (1.7) adapted so that when it is activated in an operative mode, the laser beam exits the device until striking a reference element (2.4) of the wind sensor (2) for adjusting the relative orientation between the orientation error determination device (1) and the wind sensor (2).

8. A wind sensor system comprising an orientation error determination device (1) according to any of the preceding claims and a wind sensor (2).

9. The wind sensor system according to claim 8, wherein the wind sensor (2) is a wind vane (2) comprising:
- a fixed support (2.1),
- a moving element (2.2) adapted for adopting the orientation of the wind,
- a transducer adapted for providing a signal with a value proportional to the angle between the fixed support (2.1) and the moving element (2.2), and wherein
- the fixed support (2.1) is attached to the second base (1.2) of the orientation error determination device (1).

10. The wind sensor system according to claims 7 and 9, wherein the laser emitter (1.7) for adjusting the relative orientation between the orientation error determination device (1) and the wind sensor (2) is adapted for striking a reference point (2.4) of the moving element (2.2) of the wind vane.

11. The wind sensor system according to claims 7 and 8, wherein the wind sensor (2) is an ultrasonic anemometer and wherein the laser emitter (1.7) for adjusting the relative orientation between the orientation error determination device (1) and the ultrasonic anemometer is adapted for striking a reference boom of the ultrasonic anemometer.

12. The wind sensor system according to claims 7 and 8, wherein the wind sensor (2) is either a LIDAR device or a SODAR device attached to the first base (1.1), and wherein the laser emitter (1.7) for adjusting the relative orientation between the orientation error determination device (1) and the wind sensor (2) is adapted for striking a reference point of the SODAR/LIDAR.

## Patentansprüche

1. Vorrichtung (1) zum Bestimmen des Orientierungsfehlers eines Windsensors (2) in Bezug auf den geographischen Nordpol, aufweisend:
- eine erste Grundplatte (1.1), die zur Befestigung der Vorrichtung (1) an einer Trägerstruktur geeignet ist;
- Einstellmittel (4) zum Einstellen der relativen Azimutorientierung zwischen der Vorrichtung (1) und dem Windsensor (2);
- Fotosensorische Mittel (1.3), die zum Ablesen des Azimuts der Sonne geeignet sind,
- einen Ausgang, der konfiguriert ist, um mindestens den abgelesenen Azimutwert der Sonne (*A*ₘ) bereitzustellen, der von den fotosensorischen Mitteln (1.3) abgelesen wird, und
- eine zweite Grundplatte (1.2), die zur Befestigung des Windsensors (2) an der Vorrichtung (1) geeignet ist,
wobei:
- die erste Grundplatte (1.1) und die zweite Grundplatte (1.2) entsprechend einer Längsrichtung voneinander beabstandet sind;
- die fotosensorischen Mittel (1.3) ein Gehäuse (1.3.1) und Fotosensorelemente (1.3.2) aufweisend, worin diese Fotosensorelemente (1.3.2) auf einer Ebene quer zur Längsrichtung angeordnet sind, die mit der vertikalen Richtung in einem Betriebsmodus übereinstimmt;
- die fotosensorischen Mittel (1.3), die so zwischen den beiden Grundplatten (1.1, 1.2) angeordnet sind, dass in einem Betriebsmodus die erste Grundplatte (1.1), die zweite Grundplatte (1.2) und die fotosensorischen Mittel (1.3) entsprechend der Längsrichtung verteilt sind;
- die Fotosensorelemente (1.3.2) entsprechend der Projektion auf die sie enthaltene Ebene in Einklang mit der Längsrichtung, perimetrisch von dem Gehäuse (1.3.1) umgeben sind; wobei das Gehäuse (1.3.1) eine im Wesentlichen zylindrische oder prismatische Konfiguration aufweist und in seinen Seitenwänden eine Vielzahl von vertikalen Schlitzen (1.3.1.1) aufweist, die für den Durchgang von Sonnenstrahlen gleichmäßig um den Umfang verteilt sind; wobei die Schlitze (1.3.1.1) in die Längsrichtung ausgerichtet sind, was in einem Betriebsmodus den Durchgang von Sonnenstrahlen zu den in dem Gehäuse (1.3.1) untergebrachten Fotosensorelementen (1.3.2) erlaubt, um den abgelesenen Azimutwert der Sonne (*A*ₘ) in Abhängigkeit der Beleuchtung der Fotosensorelemente (1.3.2) durch die durch die Schlitze (1.3.1.1) gehenden Sonnenstrahlen und der Position der Schlitze (1.3.1.1), zu bestimmen.

2. Vorrichtung (1) nach Anspruch 1, wobei diese zusätzlich eine zentrale Verarbeitungseinheit (1.4) aufweist, die geeignet ist:
a) den abgelesenen Azimutwert der Sonne (*A*ₘ) zu empfangen,
b) den theoretischen Azimutwert (Ψ), mittels der Gleichungen der Sonnenkoordinaten auf der Himmelkugel, in Abhängigkeit von dem Datum, der Zeit und der GPS-Position der Vorrichtung (1) zum Bestimmen eines Orientierungsfehlers zu bestimmen, wenn dieser von den fotosensorischen Mitteln (1.3) abgelesen wird, und
c) in einer Ausgabe die geographische Orientierung als Offset-Wert zwischen dem abgelesenen Azimutwert der Sonne (*A*ₘ) und dem theoretischen Azimutwert (Ψ), der auf Grundlage der Gleichungen der Sonnenkoordinaten auf der Himmelskugel bestimmt wird, zu bestimmen und bereitzustellen.

3. Vorrichtung (1) nach Anspruch 2, wobei die Vorrichtung (1) zum Bestimmen des Orientierungsfehlers aufweist:
- eine GPS-Vorrichtung (1.5), die: der zentralen Verarbeitungseinheit (1.4) den Wert der GPS-Position, das Datum und die Uhrzeit oder beides bereitstellt;
- eine Uhr, die der zentralen Verarbeitungseinheit (1.4) Datums und Zeitwerte bereitstellt;
- einen Neigungssensor (1.8), und wobei die zentrale Verarbeitungseinheit (1.4) geeignet ist, eine Korrektur des abgelesenen Azimutwerts der Sonne (*A*ₘ) in Abhängigkeit der durch den Neigungssensor (1.8) bereitgestellten Neigung vorzunehmen; oder
- jede Kombination des vorgenannten.

4. Vorrichtung (1) nach Anspruch 2 oder 3, wobei die zentrale Verarbeitungseinheit eingerichtet ist, den abgelesenen Azimutwert der Sonne (*A*m) in Abhängigkeit der Fotosensorelemente zu bestimmen, die durch den Lichtstrahl oder durch die die Schlitze hindurchgehen Strahlen beleuchtet werden.

5. Vorrichtung (1) nach einem der vorhergehenden Ansprüche, wobei die Fotosensorelemente (1.3.2) Fotosensor-Pixel aufweisen, und wobei diese Fotosensorelemente (1.3.2) in Umfangsrichtung auf der Ebene quer zur Längsrichtung verteilt sind und konzentrisch zu dem geschlitzten Gehäuse (1.3.1) positioniert sind.

6. Vorrichtung (1) nach Anspruch 5, aufweisend eine Vielzahl von Fotosensorelementen (1.3.2), von denen jedes eine gerade Linie von Sensorpixeln aufweist, die in Umfangsrichtung in Einklang mit geraden Abschnitten, die einem oder mehreren regelmäßigen Polygonen entsprechen, verteilt sind.

7. Vorrichtung (1) nach einem der vorhergehenden Ansprüche, zusätzlich einen Lasersender (1.7) aufweisend, der geeignet ist, dass, wenn er in einem Betriebsmodus aktiviert wird, der Laserstrahl die Vorrichtung verlässt, bis er auf ein Referenzelement (2.4) des Windsensors (2) auftrifft, die relative Orientierung zwischen der Vorrichtung (1) zum Bestimmen eines Orientierungsfehlers und dem Windsensor (2) einzustellen.

8. Windsensorsystem aufweisend eine Vorrichtung (1) zum Bestimmen eines Orientierungsfehlers gemäß einem der vorhergehenden Ansprüche und einen Windsensor (2).

9. Windsensorsystem nach Anspruch 8, wobei der Windsensor (2) eine Windfahne (2) ist, aufweisend:
- einen Befestigungsträger (2.1),
- ein bewegliches Element (2.2), das geeignet ist, die Orientierung des Windes anzunehmen,
- einen Wandler, der geeignet ist, ein Signal mit einem Wert bereitzustellen, der proportional zum Winkel zwischen dem Befestigungsträger (2.1) und dem beweglichen Element (2.2) ist, und wobei
- der Befestigungsträger (2.1) an die zweite Grundplatte (1.2) der Vorrichtung (1) zum Bestimmen eines Orientierungsfehlers befestigt ist.

10. Windsensorsystem nach Anspruch 7 und 9, wobei der Lasersender (1.7) zum Einstellen der relativen Orientierung zwischen der Vorrichtung (1) zum Bestimmen eines Orientierungsfehlers und dem Windsensor (2) geeignet ist, auf einen Referenzpunkt (2.4) des beweglichen Elements (2.2) der Windfahne aufzutreffen.

11. Windsensorsystem nach Anspruch 7 und 8, wobei der Windsensor (2) ein Ultraschallanemometer ist und wobei der Lasersender (1.7), der zum Einstellen der relativen Orientierung zwischen der Vorrichtung (1) zum Bestimmen eines Orientierungsfehlers und dem Ultraschallanemometer dient, geeignet ist, auf einen Referenzarm des Ultraschallanemometers aufzutreffen.

12. Windsensorsystem nach den Anspruch 7 und 8, wobei der Windsensor (2) entweder eine LIDAR-Vorrichtung oder eine SODAR-Vorrichtung ist, die an der ersten Grundplatte (1.1) befestigt ist, und wobei der Lasersender (1.7), der zum Einstellen der relativen Orientierung zwischen der Vorrichtung (1) zum Bestimmen eines Orientierungsfehlers und dem Windsensor (2) dient, zum Auftreffen auf einen Referenzpunkt des SODAR/LIDARs geeignet ist.

## Revendications

1. Un dispositif (1) pour déterminer l'erreur d'orientation d'un capteur de vent (2) par rapport au pôle Nord géographique, comprenant :
- une première embase (1.1) adaptée pour fixer le dispositif (1) à une structure de support ;
- des moyens de réglage (4) pour régler l'orientation azimutale relative entre le dispositif (1) et le capteur de vent (2) ;
- des moyens de photodétection (1.3) adaptés pour lire l'azimut du soleil,
- une valeur de sortie configurée pour fournir au moins la valeur lue d'azimut du soleil (*A*ₘ) lue par les moyens de photodétection (1.3), et
- une deuxième embase (1.2) adaptée pour fixer le capteur de vent (2) au dispositif (1),
dispositif dans lequel
- la première embase (1.1) et la deuxième embase (1.2) sont espacées l'une de l'autre selon une direction longitudinale ;
- les moyens de photodétection (1.3) comprennent un boîtier (1.3.1) et des éléments de photodétection (1.3.2), ces éléments de photodétection (1.3.2) étant situés sur un plan transversal à la direction longitudinale, coïncidant avec la direction verticale dans un mode opérationnel ;
- les moyens de photodétection (1.3) sont situés entre les deux embases (1.1, 1.2), de sorte que, dans un mode opérationnel, la première embase (1.1), la deuxième embase (1.2) et les moyens de photodétection (1.3) sont répartis selon la direction longitudinale ;
- les éléments photosensibles (1.3.2), selon la projection selon la direction longitudinale dans le plan qui les contient, sont entourés de façon périmétrique par le boîtier (1.3.1) ; le boîtier (1.3.1) a une configuration essentiellement cylindrique ou prismatique et comprend dans ses parois latérales une pluralité de fentes verticales (1.3.1.1) réparties de façon régulière sur le périmètre pour le passage des rayons du soleil ; les fentes (1.3.1.1) sont orientées dans la direction longitudinale qui, dans un mode opérationnel, permettent le passage des rayons du soleil vers les éléments photosensibles (1.3.2) logés dans ledit boîtier (1.3.1) pour déterminer la valeur lue d'azimut du soleil (*A*ₘ) selon l'éclairage des éléments photosensibles (1.3.2) par les rayons du soleil traversant les fentes (1.3.1.1) et selon la position desdites fentes (1.3.1.1).

2. Le dispositif (1) selon la revendication 1, **caractérisé en ce qu'**il comprend en outre une unité centrale de traitement (1.4) adaptée pour :
a) recevoir la valeur lue d'azimut du soleil (*Aₘ*),
b) déterminer, au moyen des équations de coordonnées solaires sur la sphère céleste, la valeur d'azimut théorique (Ψ) en fonction de la date, de l'heure et de la position GPS du dispositif (1) de détection d'erreur d'orientation lorsqu'elle est lue par les moyens de photodétection (1.3), et
c) déterminer et fournir dans une valeur de sortie l'orientation géographique en tant que valeur de décalage entre la valeur lue d'azimut du soleil (*A*ₘ) et la valeur théorique d'azimut du soleil (Ψ) déterminée à partir des équations des coordonnées solaires sur la sphère céleste.

3. Le dispositif (1) selon la revendication 2, **caractérisé en ce que** le dispositif (1) de détermination d'erreur d'orientation comprend :
- un dispositif GPS (1.5) fournissant : la valeur de la position GPS, la date et l'heure, ou les deux, à l'unité centrale de traitement (1.4) ;
- une horloge pour fournir les valeurs de date et d'heure à l'unité centrale de traitement (1.4) ;
- un capteur d'inclinaison (1.8), l'unité centrale de traitement (1.4) étant adaptée pour établir une correction de la valeur lue d'azimut du soleil (*A*ₘ) selon l'inclinaison fournie par le capteur d'inclinaison (1.8) ; ou
- toute combinaison de ce qui précède.

4. Le dispositif (1) selon la revendication 2 ou la revendication 3, dans lequel l'unité centrale de traitement est configurée pour déterminer la valeur lue d'azimut du soleil (*A*ₘ) en fonction des éléments photosensibles éclairés par le ou les faisceaux lumineux passant par les fentes.

5. Le dispositif (1) selon l'une quelconque des revendications précédentes, dans lequel les éléments photosensibles (1.3.2) comprennent des pixels photosensibles, et dans lequel ces éléments photosensibles (1.3.2) sont répartis circonférentiellement sur le plan transversal à la direction longitudinale et placés concentriquement par rapport au boîtier à fentes (1.3.1).

6. Le dispositif (1) selon la revendication 5, comprenant une pluralité d'éléments photosensibles (1.3.2), chacun d'eux comprenant une ligne droite de pixels de détection, distribués circonférentiellement selon des portions droites selon un ou plusieurs polygones réguliers.

7. Le dispositif (1) selon l'une quelconque des revendications précédentes, comprenant en outre un émetteur laser (1.7) adapté de telle sorte que lorsqu'il est activé en mode opérationnel, le faisceau laser quitte le dispositif jusqu'à ce qu'il frappe un élément de référence (2.4) du capteur de vent (2) pour régler l'orientation relative entre le dispositif (1) de détermination d'erreur d'orientation et le capteur de vent (2).

8. Un système de capteur de vent comprenant un dispositif (1) de détermination d'erreur d'orientation selon l'une quelconque des revendications précédentes et un capteur de vent (2).

9. Le système de capteur de vent selon la revendication 8, dans lequel le capteur de vent (2) est une girouette (2) comprenant :
- un support fixe (2.1),
- un élément mobile (2.2) adapté pour adopter l'orientation du vent,
- un transducteur adapté pour fournir un signal avec une valeur proportionnelle à l'angle entre le support fixe (2.1) et l'élément mobile (2.2), et dans lequel
- le support fixe (2.1) est fixé sur la deuxième embase (1.2) du dispositif (1) de détermination d'erreur d'orientation.

10. Le système de capteur de vent selon les revendications 7 et 9, dans lequel l'émetteur laser (1.7) pour régler l'orientation relative entre le dispositif (1) de détermination d'erreur d'orientation et le capteur de vent (2) est adapté pour frapper un point de référence (2.4) de l'élément mobile (2.2) de la girouette.

11. Le système de capteur de vent selon les revendications 7 et 8, dans lequel le capteur de vent (2) est un anémomètre à ultrasons et dans lequel l'émetteur laser (1.7) pour régler l'orientation relative entre le dispositif (1) de détermination d'erreur d'orientation et l'anémomètre à ultrasons est adapté pour frapper une flèche de référence de l'anémomètre à ultrasons.

12. Le système de capteur de vent selon les revendications 7 et 8, dans lequel le capteur de vent (2) est soit un dispositif LIDAR, soit un dispositif SODAR fixé sur la première embase (1.1), et dans lequel l'émetteur laser (1.7) pour régler l'orientation relative entre le dispositif (1) de détermination d'erreur d'orientation et le capteur de vent (2) est conçu pour frapper un point de référence du SODAR/LIDAR.
